(19) Europäisches Patentamt
European Patent Office
Office européen des brevets

(11) **EP 2 348 680 A1**

(12) **EUROPEAN PATENT APPLICATION**
published in accordance with Art. 153(4) EPC

(43) Date of publication:
**27.07.2011 Bulletin 2011/30**

(51) Int Cl.:
*H04L 12/56* (2006.01)    *H04L 1/00* (2006.01)
*H04L 12/18* (2006.01)    *H04L 29/08* (2006.01)

(21) Application number: **09831420.6**

(22) Date of filing: **28.08.2009**

(86) International application number:
**PCT/CN2009/073616**

(87) International publication number:
**WO 2010/066143 (17.06.2010 Gazette 2010/24)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **08.12.2008  CN 200810239101**

(71) Applicant: **Huawei Device Co., Ltd.**
**Shenzhen, Guangdong 518129 (CN)**

(72) Inventors:
• **LI, Yunbai**
  **Shenzhen**
  **Guangdong 518129 (CN)**
• **SU, Honghong**
  **Shenzhen**
  **Guangdong 518129 (CN)**

(74) Representative: **Körber, Martin Hans**
**Mitscherlich & Partner**
**Patent- und Rechtsanwälte**
**Sonnenstraße 33**
**80331 München (DE)**

(54) **METHOD, APPARATUS AND SYSTEM FOR PROCESSING NETWORK QUALITY OF SERVICE**

(57)    A Set Top Box (STB), a net conference terminal, a method, an apparatus and a system for processing network Quality of Service (QoS) are disclosed. The method for processing network QoS includes: obtaining actual usage information of network quality parameters; and obtaining descriptive information of network QoS according to the actual usage information of the network quality parameters. The network QoS processing apparatus includes: a first obtaining module, configured to obtain actual usage information of the network quality parameters which include transmission bandwidth, and network delay and/or network packet loss ratio; and a second obtaining module, configured to obtain descriptive information of network QoS according to the actual usage information of the network quality parameters. The network QoS processing system includes a communication network and a network QoS processing apparatus located in the communication network. The method, apparatus and system for processing network QoS can improve the accuracy of measuring network QoS.

```
┌─────────────────────────────────────┐
│  Obtain actual usage information of  │   101
│  network quality parameters          │
└─────────────────────────────────────┘
                  │
                  ▼
┌─────────────────────────────────────┐
│  Obtain descriptive information of   │   102
│  network QoS according to the actual │
│  usage information of the network    │
│  quality parameters                  │
└─────────────────────────────────────┘
```

FIG. 1

Printed by Jouve, 75001 PARIS (FR)

## Description

This application claims priority to Chinese Patent Application No. 200810239101.9, filed with the Chinese Patent Office on December 8, 2008 and entitled "METHOD, APPARATUS AND SIYSTEM FOR PROCESSING NETWORK QUALITY OF SERVICE", which is incorporated herein by reference in its entirety.

## FIELD OF THE INVENTION

The present invention relates to the field of communication technologies, and in particular, to a Set Top Box (STB) and a net conference terminal, a method, an apparatus, and a system for processing network Quality of Service (QoS).

## BACKGROUND OF THE INVENTION

For a real-time media service based on a packet network, network QoS is critical to the service quality. When the network QoS is low, the service quality deteriorates drastically and is hardly acceptable for a user. If a prompt or an alert is sent to the user when the network QoS deteriorates, the user can know the imminent deterioration of service quality and judge whether the deterioration is caused by the network.

In the prior art, the network QoS is judged in many ways. For example, the network QoS may be determined through detection of packet loss, and the network QoS is regarded as being low when packet loss occurs, and is regarded as being good when no packet loss occurs; or, the network QoS may be judged by sending an Internet Control Message Protocol (ICMP) packet, network delay is detected through the ICMP packet, and a further judgment is made about whether Voice over Internet Protocol (VoIP) can be started for communication, and the user is notified if the VoIP communication is not practicable; or, the network QoS is obtained according to both network delay and the packet loss ratio, and is used to determine the charging data.

The prior art has the following disadvantages: Only the packet loss ratio of the network or the network delay is considered in the measurement of the network QoS in the prior art, which leads to low accuracy and high error rates in the result of measuring the network QoS.

## SUMMARY OF THE INVENTION

Embodiments of the present invention provide an STB, a net conference terminal, a method, an apparatus and a system for processing network QoS, to overcome low accuracy and high error rates in the result of measuring network QoS and implement accurate measurement of the network QoS.

A method for processing network QoS in an embodiment of the present invention includes:

obtaining actual usage information of network quality parameters, where the network quality parameters include transmission bandwidth, and network delay and/or network packet loss ratio; and
obtaining descriptive information of network QoS according to the actual usage information of the network quality parameters.

A network QoS processing apparatus provided in an embodiment of the present invention includes:

a first obtaining module, configured to obtain actual usage information of network quality parameters, where the network quality parameters include transmission bandwidth, and network delay and/or network packet loss ratio; and
a second obtaining module, configured to obtain descriptive information of network QoS according to the actual usage information of the network quality parameters.

A network QoS processing system provided in an embodiment of the present invention includes:

a communication network and a network QoS processing apparatus located in the communication network.

The network QoS processing apparatus is configured to: obtain actual usage information of network quality parameters of the communication network, where the network quality parameters include transmission bandwidth, and network delay and/or network packet loss ratio; and obtain descriptive information of network QoS of the communication network according to the actual usage information of the network quality parameters.

An STB provided in an embodiment of the present invention includes: an interface module, a decoding module, an outputting module, and the foregoing network QoS processing apparatus, where the network QoS processing apparatus is connected to the interface module.

A net conference terminal provided in an embodiment of the present invention includes: an interface module, an encoding and decoding module, an outputting module, and the foregoing network QoS processing apparatus, where the network QoS processing apparatus is connected to the interface module.

Through the STB, the net conference terminal, the method, apparatus and system for processing network QoS provided in embodiments of the present invention, the transmission bandwidth is considered in measuring the network QoS, which improves accuracy of the measurement result and implements accurate measurement of the network QoS.

## BRIEF DESCRIPTION OF THE DRAWINGS

FIG. 1 is a schematic diagram of a flowchart of a method for processing network QoS according to a first embodiment of the present invention;

FIG. 2 is a schematic diagram of a flowchart of a method for processing network QoS according to a second embodiment of the present invention;

FIG. 3 is a schematic diagram of a flowchart of a method for processing network QoS according to a third embodiment of the present invention;

FIG. 4A is a schematic diagram of network QoS data displayed as Q = 0.6 according to an embodiment of the present invention;

FIG. 4B is a schematic diagram of network QoS data displayed as Q = 1.0 according to an embodiment of the present invention;

FIG. 5 is a schematic structural diagram of a network QoS processing apparatus according to a first embodiment of the present invention;

FIG. 6 is a schematic structural diagram of a network QoS processing apparatus according to a second embodiment of the present invention;

FIG. 7 is a schematic structural diagram of a network QoS processing apparatus according to a third embodiment of the present invention;

FIG. 8 is a schematic structural diagram of a network QoS processing apparatus according to a fourth embodiment of the present invention;

FIG. 9 is a schematic structural diagram of a second sending module according to an embodiment of the present invention;

FIG. 10 is a schematic structural diagram of an STB according to an embodiment of the present invention; and

FIG. 11 is a schematic structural diagram of a net conference terminal according to an embodiment of the present invention.

## DETAILED DESCRIPTION OF THE EMBODIMENTS

The technical solution of the present invention is described in details below with reference to the accompanying drawings and exemplary embodiments.

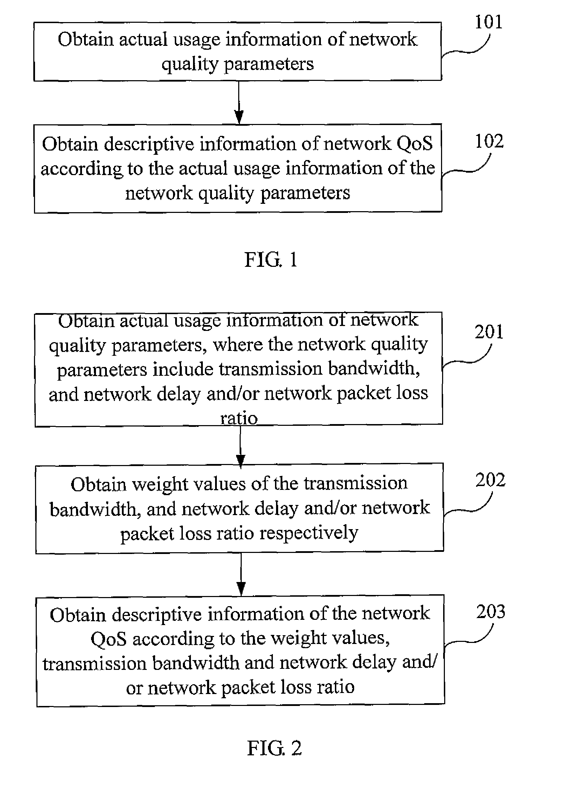

In the process of network transmission, the network packet loss ratio, network delay and transmission bandwidth are interrelated. That is, reduction of the transmission bandwidth can be used as a means of decreasing the sending rate of a sender on the network, solving the network congestion, decreasing the network packet loss ratio, and shortening network delay. However, with reduced bandwidth, the service quality is reduced, and the reduced network packet loss ratio and shortened network delay cannot reflect the network QoS accurately, and errors may occur. Therefore, in the embodiments of the present invention, transmission bandwidth is considered in measuring the network QoS. FIG. 1 is a schematic diagram of a flowchart of a method for processing network QoS according to the first embodiment of the present invention. As shown in FIG. 1, the method includes the following steps:

Step 101: Obtain actual usage information of network quality parameters. That is, the network QoS processing apparatus of the communication network obtains values of the network quality parameters, where the network quality parameters may be a combination of transmission bandwidth and network delay, or a combination of transmission bandwidth and network packet loss ratio, or a combination of transmission bandwidth, network delay and network packet loss ratio.

Step 102: Obtain descriptive information of network QoS according to the actual usage information of the network quality parameters.

In this embodiment, because the transmission bandwidth is considered in the process of measuring the network QoS, the measurement of the network QoS is more accurate, fewer errors occur, and the obtained descriptive information of the network QoS reflects the network QoS more accurately and objectively. The quantitative network QoS data is fed back to the user as a prompt and an alert, which helps the user judge whether the deterioration of the service quality is caused by the network or the terminal. In this embodiment, a function relationship between the network QoS and the network quality parameter is set up through a weight model or Gilbert model, and the obtained values of the network quality parameters are substituted into the function relationship to work out the descriptive information of the network QoS. The method is detailed in the following embodiment.

FIG. 2 is a schematic diagram of a flowchart of a method for processing network QoS according to a second embodiment of the present invention. As shown in FIG. 2, the method includes the following steps:

Step 201: Obtain actual usage information of network quality parameters, where the network quality parameters include transmission bandwidth, and network delay and/or network packet loss ratio. The actual usage information of the network quality parameters in this step refers to the value of each parameter in the current network.

Step 202: Obtain weight values of the transmission bandwidth, and network delay and/or network packet loss ratio. The weight values may be determined according to the network type and the quantitative relationship between transmission bandwidth, network delay and network packet loss ratio.

Step 203: Obtain descriptive information of the network QoS according to the weight values, transmission bandwidth, network delay, and/or network packet loss ratio. This step uses a weight model to set up a function relationship between the network QoS and the transmission bandwidth, and network delay and/or network packet loss ratio. The actual usage information (namely, the value of each parameter) of the network quality parameters obtained in step 101 is substituted into the function relationship to obtain the descriptive information of the network QoS. The expression of the weight model is: $Q = Ab + Bd + Cp$, where Q is descriptive information of the network QoS; A, B, and C represent the weight values of transmission bandwidth b, network delay d and network packet loss ratio p respectively, and A is nonzero.

In this embodiment, a function relationship is set up between the network QoS and the transmission bandwidth, network delay, and/or network packet loss ratio through a weight model, which takes the impact of the transmission bandwidth into consideration and works out more accurate descriptive information of the network QoS.

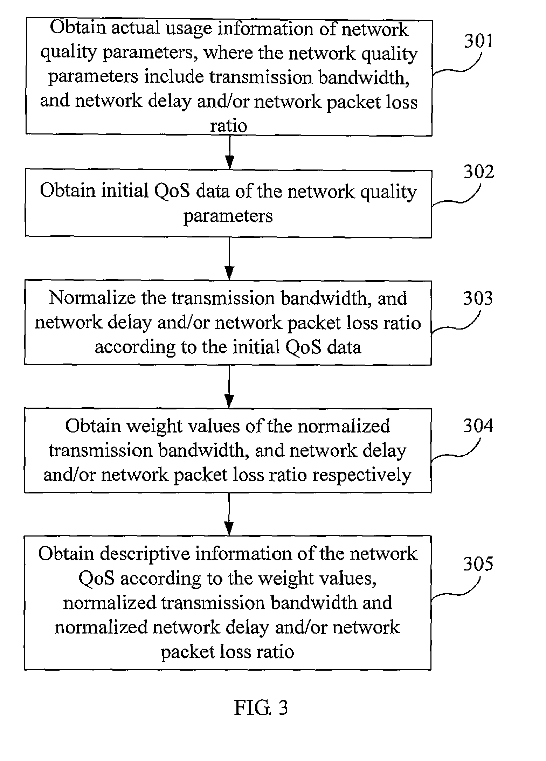

FIG. 3 is a schematic diagram of a flowchart of a method for processing network QoS according to a third embodiment of the present invention. As shown in FIG. 3, the method includes the following steps:

Step 301: Obtain actual usage information of network quality parameters, where the network quality parameters include transmission bandwidth, and network delay and/or network packet loss ratio. Packet size is one of the parameters that affect the network quality, but generally remains unchanged. Therefore, the impact of the packet size may be disregarded.

Step 302: Obtain the initial QoS data of the network quality parameters, namely, obtain the best network transmission bandwidth, best network delay, best network packet loss ratio, worst network transmission bandwidth, worst network delay, and worst network packet loss ratio.

In this step, the network quality parameters are normalized according to the obtained initial QoS data. The preceding best values and worst values may be set by the user, or estimated by the system automatically, for example, estimated according to the network interface type. The best transmission bandwidth may also be determined through capability negotiation. The worst transmission bandwidth is expressed by BB, and the best transmission bandwidth is expressed by GB, and their values may be 64 Kbps and 640 Kbps respectively. The worst network delay is expressed by BD, and the best network delay is expressed by GD, and their values may be 200 ms and 50 ms respectively. The worst network packet loss ratio is expressed by BP, and the best network packet loss ratio is expressed by GP, and their values may be 20% and 0 respectively. The foregoing parameters may be used to make up the initial QoS value (EQ):

$$EQ = \begin{bmatrix} BB & GB \\ BD & GD \\ BP & GP \end{bmatrix}$$

Step 303: Normalize the transmission bandwidth, and network delay and/or network packet loss ratio according to the initial QoS data.

In this step, the parameters are normalized to facilitate comparison and calculation. Each parameter is normalized to a value between 0 and 1. In this way, the network QoS data can be restricted to a range between 0 and 1, where 0 represents the worst value and 1 represents the best value. Generally, in the network service range, the network QoS is linearly related to the network quality parameter. Therefore, linear transformation may be applied. The normalization equation is:

$$x' = \begin{cases} Ax+C \cdots Ax+C \in [0,1] \\ 0 \cdots\cdots\cdots Ax+C < 0 \\ 1 \cdots\cdots\cdots Ax+C > 1 \end{cases}, \text{where} \quad A = \frac{1}{GX-BX} \quad \text{and} \quad C = \frac{BX}{BX-GX}.$$

In the foregoing formula, x represents a network quality parameter, whose value may be b, d, or p; the corresponding BX and GX represent the worst value and the best value of the network quality parameter respectively; BX is BB, BD, or BP; and GX is GB, GD, or GP. Therefore, the normalized transmission bandwidth $b'$ is calculated through:

$$b' = Ab + C = \frac{b}{GB-BB} + \frac{BB}{BB-GB} = \frac{BB-b}{BB-GB}.$$

If b < BB, $b'$ = 0; if b > GB, $b'$ = 1.
Similarly, the normalized network delay $d'$ is calculated through:

$$d' = \frac{BD-d}{BD-GD}.$$

If d > BD, $d'$ = 0; if d < GD, $d'$ = 1.
Similarly, the normalized network packet loss ratio $p'$ is calculated through:

$$p' = \frac{BP-p}{BP-GP}.$$

If p < BP, $p'$ = 0; if p > GP, $p'$ = 1.

For example, if $EQ = \begin{bmatrix} 64 & 640 \\ 200 & 50 \\ 20\% & 0 \end{bmatrix}$, the constraint of $x \in [0,1]$ is introduced to obtain the normalized expression of the network quality parameter:

$$b' = \begin{cases} \dfrac{b-64}{576} \cdots b \in [64,640] \\ 0 \cdots\cdots\cdots b < 64 \\ 1 \cdots\cdots\cdots b > 640 \end{cases}, \text{measured in Kbps;}$$

$$d' = \begin{cases} \dfrac{200 - d}{150} \cdots d \in [50, 200] \\ 0 \cdots\cdots\cdots d > 200 \\ 1 \cdots\cdots\cdots d < 50 \end{cases} \text{, measured in ms;}$$

$$p' = \begin{cases} \dfrac{0.2 - p}{0.2} \cdots p \in [0.2, 0] \\ 0 \cdots\cdots\cdots p > 0.2 \end{cases}.$$

Step 304: Obtain the weight values corresponding to the normalized transmission bandwidth, normalized network delay and/or normalized network packet loss ratio respectively.

After the normalized network quality parameters are calculated in step 303, a weight model is used to calculate the weight of the transmission bandwidth $b'$, weight of the network delay d', weight of the network packet loss ratio $p'$. Such weights are expressed as $W_b$, $W_d$, and $W_p$ respectively, and $W_b$ is nonzero.

Step 305: Obtain descriptive information of the network QoS according to the weight values, normalized transmission bandwidth, and normalized network delay and/or network packet loss ratio.

In this step, the network QoS (Q) is expressed as:

$$Q = \begin{cases} 0 \cdots\cdots\cdots\cdots\cdots\cdots\cdots\cdots b' \times d' \times p' = 0 \\ f(b, d, p) = W_b b' + W_d d' + W_p p' \cdots b' \times d' \times p' \neq 0 \end{cases}$$

Because $b'$, $d'$ and $p'$ are normalized parameters, it is appropriate to set $Q \in [0,1]$ when $W_b + W_d + W_p = 1$. For example, when $W_b$, $W_d$, and $W_p$ are 0.3, 0.3, and 0.4 respectively,

$$Q = 0.3b' + 0.3d' + 0.4p' \text{, where } b' \times d' \times p' \neq 0.$$

$b' \times d' \times p' = 0$ means that when the value of any network QoS parameter reaches its worst value, it is deemed that the network QoS is 0. The weights of the parameters above may be set according to the network conditions or network type. It is also appropriate to consider only the impact of the transmission bandwidth b and the network packet loss ratio p, or the impact of the network bandwidth b and the network delay d.

When only the impact of the transmission bandwidth (b) and the network packet loss ratio (p) on the network QoS is considered, the weight of the network delay $(W_d)$ is set to 0.
In this case, the network QoS (Q) is expressed as:

$$Q = \begin{cases} 0 \cdots\cdots\cdots\cdots\cdots\cdots\cdots\cdots b' \times p' = 0 \\ f(b, p) = W_b b' + W_p p' \cdots\cdots b' \times p' \neq 0 \end{cases}$$

Because b' and p' are normalized parameters, it is appropriate to set $Q \in [0,1]$ when $W_b + W_p = 1$. For example, when $W_b$ and $W_p$ are 0.4 and 0.6 respectively,

$$Q = 0.4b' + 0.6p' \text{, where } b' \times p' \neq 0.$$

$b' \times p' = 0$ means that when the value of any network QoS parameter reaches its worst value, it is deemed that the network QoS is 0.

When only the impact of the transmission bandwidth (b) and the network delay (d) on the network QoS is considered, the weight of the network packet loss ratio ($W_p$) is set to 0. In this case, the network QoS (Q) is expressed as:

$$Q = \begin{cases} 0 \cdots\cdots\cdots\cdots\cdots\cdots\cdots\cdots\cdots\cdots\cdots b' \times d' = 0 \\ f(b,d) = W_b b' + W_d d' \cdots\cdots\cdots b' \times d' \neq 0 \end{cases}$$

Because $b'$ and $d'$ are normalized parameters, it is appropriate to set $Q \in [0,1]$ when $W_b + W_d = 1$. For example, when $W_b$ and $W_d$ are 0.4 and 0.6 respectively,

$$Q = 0.4b' + 0.6d', \text{ where } b' \times d' \neq 0.$$

$b' \times d' = 0$ means that when the value of any network QoS parameter reaches its worst value, it is deemed that the network QoS is 0.

After the function relationship between the network QoS and each network quality parameter is obtained, each parameter value in the network is detected and substituted into the foregoing relationship to obtain quantitative network QoS data. The quantitative network QoS data reflects the network quality more objectively and accurately. In the process of measuring the network QoS in the foregoing embodiment, normalization is performed first, which facilitates calculation and comparison between the calculation results.

In the previous embodiment, a function relationship is set up between the descriptive information of the network QoS and the network quality parameter according to the weight model; in this embodiment, a function relationship is set up through a Gilbert model, and the actual usage information of the network quality parameters is obtained first. The network quality parameters include transmission bandwidth, network delay, network packet loss ratio, and packet size.

If the network packet loss ratio is higher than a threshold, the descriptive information of the network QoS is obtained according to the packet size, network delay, and network packet loss ratio, namely, a Gilbert model is used to set up the following relationship: $Q = \dfrac{\eta \times s}{d \times \sqrt{p}}$ ; if the network packet loss ratio is lower than or equal to the packet loss threshold, the descriptive information of the network QoS is obtained according to the transmission bandwidth, and the relationship may be $Q = \lambda \times b$, which takes the special circumstance of a small packet loss ratio into consideration. In the foregoing relationship, Q is descriptive information of the network QoS, s is packet size, d is network delay, p is network packet loss ratio, b is transmission bandwidth, and $\alpha$ is a packet loss threshold which may be set to 0, or preferably set to 0.0015, or estimated by the system in the specific measurement process and adjusted dynamically; $\eta$ and $\lambda$ are set coefficients; $\eta$ is preferably set to 0.61 and $\lambda$ is set to 1; $\alpha$ is a set packet loss threshold, which may be set to 0, or preferably set to 0.0015.

In this embodiment, the network quality parameters include transmission bandwidth, network delay, network packet loss ratio, and packet size. The packet size generally keeps unchanged.

It is also appropriate to restrict the descriptive information of the network QoS to a range between 0 and 1, to introduce the best transmission bandwidth, and to set up the following function relationship between the network quality parameter and the descriptive information of the network QoS:

$$Q= \begin{cases} 0 \quad \cdots\cdots\cdots\cdots\cdots\cdots\cdots\cdots\cdots \quad p > BP \ or \ d > BD \\ Min\left(\dfrac{\eta \times s}{d \times GB \times \sqrt{p}}, 1\right) \quad \cdots\cdot \quad BP \geq p > a \ and \ d \leq BD \\ Min\left(\dfrac{\lambda \times b}{GB}, 1\right) \quad \cdots\cdots\cdots\cdots \quad p \leq \alpha \end{cases}$$

In the formula above, BD is the worst network delay, BP is the worst network packet loss ratio, GB is the best transmission bandwidth, and the best transmission bandwidth (GB) may be determined through capability negotiation.

In this embodiment, a function relationship between the network QoS and each parameter is set up through a Gilbert model; considering that the network QoS still differs even if the network packet loss ratio is 0, the packet size, network delay, network packet loss ratio and transmission bandwidth of the current network are obtained and substituted into the foregoing function relationship to work out the network QoS quantitatively. The value (Q) of the descriptive information of the network QoS ranges between 0 and 1, where 0 represents the worst level and 1 represents the best level. In the foregoing function relationship, the GB in the denominator and the Min function are introduced in order to let the Q value fall within [0, 1], and are optional in practice.

In the embodiments of the preceding method, it is necessary to obtain the transmission bandwidth, network delay, and network packet loss ratio of the network. To measure the network packet loss ratio (p), the receiver needs to collect statistics. For example, if the data is transmitted through the Real-Time Transport Protocol (RTP), the RTP packets are numbered sequentially, and the sequence number is inserted into the RTP packet header. In this way, the receiver can measure the packet loss ratio in a period (T):

$$p = \left(N_e - N_r\right) \Big/ N_e$$

In the formula above, $N_e$ is the number of packets expected to receive, $N_r$ is the number of packets received actually, and the statistic period (T) is generally the time interval of Sender Report (SR) control packets in two consecutive packets, or another preset value.

The network delay (d) is a unidirectional delay, which is the time spent in transmitting a packet from the sender to the receiver, and may be calculated by using many methods. The first method is to measure the Round-Trip Time (RTT), and the network delay is expressed as $d = RTT/_2$. In a practical network environment, the sending delay may differ from the receiving delay sharply. Therefore, it is not accurate to substitute a half of the RTT for the unidirectional delay. An effective method is to measure the unidirectional delay directly. Another method is to synchronize the clock between the sender and the receiver when measuring the unidirectional delay. After the synchronization, the network delay of the receiver can be calculated according to the timestamp directly. The delay d may be expressed as $d = T_r - T_s$, where $T_s$ is the sending timestamp and $T_r$ is the receiving timestamp.

In an IP network environment, the clock synchronization between the sender and the receiver is generally not precise, and the delay may be calculated in incremental mode, namely, the network delay is calculated according to the difference between unidirectional delays:

$$d = d_0 + \Delta d = d_0 + \left[\left(T_r - T_s\right) - \left(T_{r0} - T_{s0}\right)\right]$$

In the formula above, $d_0$ is an initial delay value (corresponding to time $t_0$ of the receiver), which may be expressed by a half of the RTT; $\Delta d$ is a delay change relative to time $t_0$; $(T_r - T_s)$ is a unidirectional delay at the current time and is calculated according to the sending time ($T_s$) and the receiving time ($T_r$); $(T_{r0} - T_{s0})$ is a unidirectional delay at time $t_0$ and is calculated according to the sending time ($T_{r0}$) and the receiving time ($T_{s0}$), and the difference between the two unidirectional delay values is the delay change value, which eliminates the error caused by lack of clock synchronization. Another method for calculating the delay is: adding the delay value at the previous time to the delay difference between the current time and the previous time to obtain the delay.

For the transmission bandwidth b, depending on the network conditions, the current receiving rate of the network interface on the receiver or a previously measured receiving rate of the network interface on the receiver is used as transmission bandwidth. The network conditions include network packet loss ratio and network delay. For example, if the network packet loss ratio is used as the network condition, its initial value may be set to the best bandwidth (GB), and the subsequent values are determined in the following way:

When packet loss occurs, namely, when the network packet loss ratio is higher than the packet loss threshold, the current receiving rate of the network interface on the receiver is used as the transmission bandwidth (b); when no packet loss occurs or the packet loss ratio is very low, namely, when the network packet loss ratio is lower than or equal to a preset threshold, the previously measured bandwidth or the current receiving rate of the network interface on the receiver is used as the current transmission bandwidth (b), whichever is higher. That is:

$$b_n = \begin{cases} GB,.........................n = 0 \\ R_r,.........................p > \alpha \\ Max(R_r, b_{n-1}),.....p \leq \alpha \end{cases}$$

In the formula above, n is the sequence number of the detected b, namely, the b detected for the $n^{th}$ time; $R_r$ is the receiving rate of the network interface on the receiver; and $\alpha$ is a preset packet loss threshold, and may be set to 0; and Max refers to taking the maximum value.

In the foregoing embodiment, because the network packet loss ratio (p) is calculated in a period, b and d may be average values in the corresponding period in practical calculation.

The current network packet loss ratio (p), current transmission bandwidth (b), current network delay (d) are detected in the foregoing method, and substituted into a relationship set up through a weight model or Gilbert model to calculate the network QoS quantitatively. Because the transmission bandwidth is considered, the calculation result is more accurate and objective.

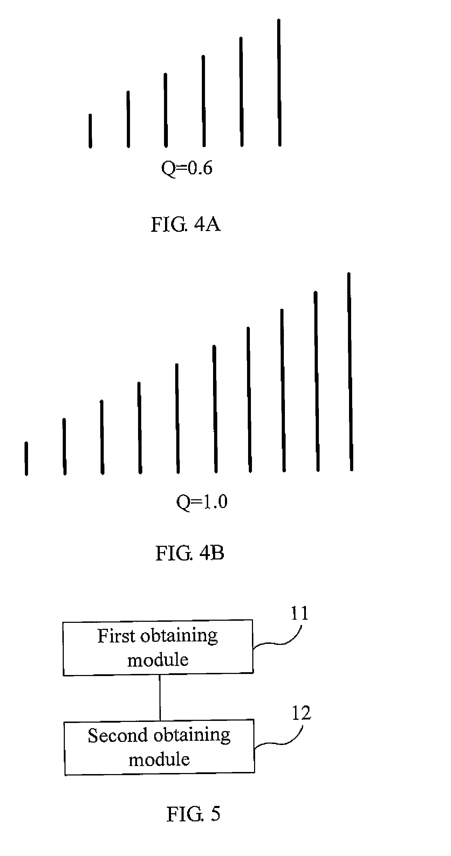

After the descriptive information of the network QoS is obtained, the descriptive information of the network QoS may be displayed to the user according to a preset display policy. Specifically, the calculated descriptive information of the network QoS (namely, the Q value obtained in the foregoing embodiment) is displayed on the displaying module directly, or the Q value is processed in a certain way, especially, the network QoS data obtained after the normalization is multiplied by 100 so that the value is displayed between 0 and 100. In this way, the user can understand and judge the network QoS. The network QoS may be displayed through graphs intuitively. FIG. 4A and FIG. 4B are two graphs displayed when Q = 0.6 and Q = 1.0 respectively, where six ascending lines indicate that the network QoS is 0.6, and ten ascending lines indicate that the network QoS is 1.0.

On the receiver, the coding algorithm may be adjusted according to the descriptive information of the network QoS. For example, when the Q value is high, namely, when the network QoS is good, the audio coding algorithm such as AAC-LD is applied, which provides good voice quality but requires a high QoS level of the network; when the Q value is low, the G.711 algorithm that requires a moderate QoS level of the network is applied.

After the descriptive information of network QoS is obtained through the foregoing method, the sending bandwidth on the sender can be obtained according to the descriptive information of the network QoS. Specifically, the adjusted sending bandwidth may be set to be in direct proportion to the descriptive information of the network QoS. For example, after the descriptive information (Q) of the network QoS is obtained in any method in the foregoing embodiment, the sending bandwidth is adjusted to $K \times Q \times GB$, where K is a scale factor. For example, when Q = 0.6, GB is 640 Kbps; when K is 1, the sender is notified to control the sending bit rate within 384 Kbps. When the Q value changes to 0.8, the sender is notified to adjust the transmission bandwidth to 512 Kbps. To avoid frequency adjustment, a Q value change threshold may be set. For example, the threshold is set to 0.1, and the adjustment is made only if $\Delta Q$ is higher than σ. Further, a minimum adjustment interval may be set, namely, the data sender is notified to adjust the transmission bandwidth only when the threshold is fulfilled and the minimum adjustment interval is fulfilled. In this embodiment, the sending bandwidth is adjusted according to the obtained descriptive information of network QoS so that the transmission bandwidth used by the data sender for sending data can change with the change of the network QoS, which improves the network QoS.

FIG. 5 is a schematic structural diagram of a network QoS processing apparatus according to a first embodiment of the present invention. As shown in FIG. 5, the apparatus includes a first obtaining module 11 and a second obtaining module 12. In practice, the first obtaining module 11 obtains actual usage information of network quality parameters. The network quality parameters include transmission bandwidth, and network delay and/or network packet loss ratio, namely, the network quality parameters may be a combination of transmission bandwidth and network delay, or a combination of transmission bandwidth and network packet loss ratio, or a combination of transmission bandwidth, network delay and network packet loss ratio. The actual usage information of the parameters refers to values of the network quality parameters obtained by the network QoS processing apparatus of the communication network. The second obtaining module 12 obtains descriptive information of the network QoS according to the actual usage information of the network quality parameters which is obtained by the first obtaining module 11. Specifically, a function relationship is set up between the descriptive information of the network QoS and the network quality parameter according to a weight model or a Gilbert model, and then the descriptive information of the network QoS is calculated according to the function relationship.

In this embodiment, because the transmission bandwidth is considered in the process of measuring the network QoS, the measurement of the network QoS is more accurate, and the obtained descriptive information of the network QoS is more accurate and objective.

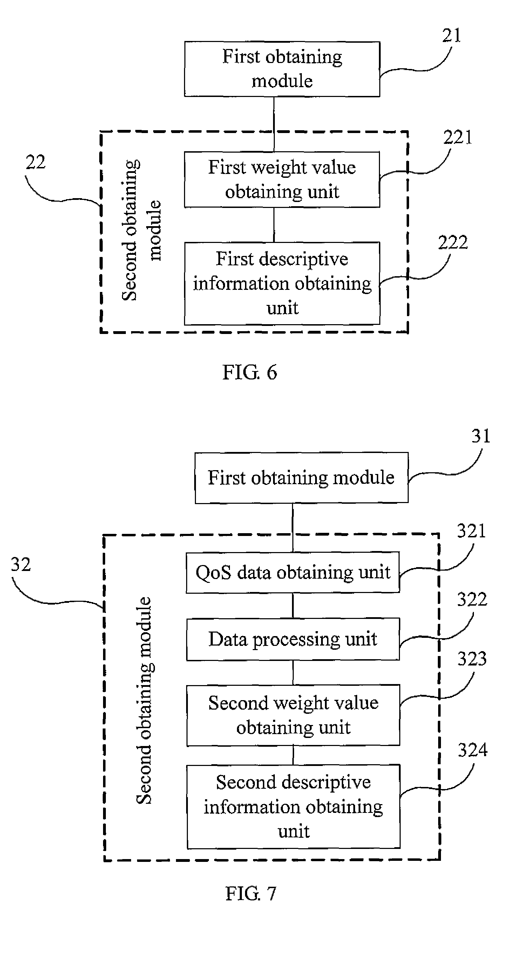

FIG. 6 is a schematic structural diagram of a network QoS processing apparatus according to a second embodiment of the present invention. As shown in FIG 6, the apparatus includes a first obtaining module 21 and a second obtaining module 22. In practice, the first obtaining module 21 is configured to obtain actual usage information of network quality parameters, where the network quality parameters include transmission bandwidth, and network delay and/or network packet loss ratio. In this embodiment, the descriptive information of the network QoS is obtained through a weight model, and the weight value of each network quality parameter needs to be obtained. Therefore, the second obtaining module 22 is divided into a first weight value obtaining unit 221 and a first descriptive information obtaining unit 222. The first weight value obtaining unit 221 is configured to obtain weight values of the transmission bandwidth, and network delay and/or network packet loss ratio. The weight values may be determined according to the network type and the quantitative relationship between transmission bandwidth, network delay and network packet loss ratio. The first descriptive information obtaining unit 222 is configured to obtain the descriptive information of the network QoS according to the weight values, transmission bandwidth, network delay, and/or network packet loss ratio.

In this embodiment, a function relationship is set up between the network QoS and the transmission bandwidth, and network delay and/or network packet loss ratio through a weight model; a weight value is preset according to the network type and the quantitative relationship between the parameters, and then the detected parameter values are substituted into the relationship to obtain the network QoS data. This embodiment takes the impact of the transmission bandwidth into consideration, improves accuracy of the measurement result, and reduces measurement errors.

FIG. 7 is a schematic structural diagram of a network QoS processing apparatus according to a third embodiment of the present invention. As shown in FIG. 7, the apparatus includes a first obtaining module 31 and a second obtaining module 32. In practice, the first obtaining module 31 is configured to obtain actual usage information of network quality parameters, where the network quality parameters include transmission bandwidth, and network delay and/or network packet loss ratio. In this embodiment, the network quality parameters are normalized first, and then the descriptive information of the network QoS is calculated according to the normalized results. Therefore, the second obtaining module 32 is divided into a QoS data obtaining unit 321, a data processing unit 322, a second weight value obtaining unit 323, and a second descriptive information obtaining unit 324. The QoS data obtaining unit 321 is configured to obtain the initial QoS data of the network quality parameters. The data processing unit 322 is configured to normalize the transmission bandwidth, and network delay and/or network packet loss ratio according to the initial QoS data. The second weight value obtaining unit 323 is configured to obtain weight values of the normalized transmission bandwidth, and normalized network delay and/or network packet loss ratio. The weight values are also "normalized", namely, the sum of weight values of all parameters is equal to 1. The second descriptive information obtaining unit 324 is configured to obtain the descriptive information of the network QoS according to the foregoing weight values, normalized transmission bandwidth, and normalized network delay and/or network packet loss ratio. Because the sum of the weight values of all parameters is equal to 1, the descriptive information of the network QoS, which is obtained by the second descriptive information obtaining unit 324, also falls between 0 and 1. The QoS data obtaining unit, data processing unit, and the second weight value obtaining unit in this embodiment are equivalent to the first weight value obtaining unit in the previous embodiment; and the second descriptive information obtaining unit in this embodiment is equivalent to the first descriptive information obtaining unit in the previous embodiment.

In this embodiment, the network quality parameters are normalized, and then a weight model is used for calculating, which facilitates the calculation process. Meanwhile, the calculation result falls between 0 and 1, which makes it easier to find change of the network QoS. Moreover, the transmission bandwidth is considered, which improves accuracy of measuring the network QoS and obtains objective descriptive information of the network QoS.

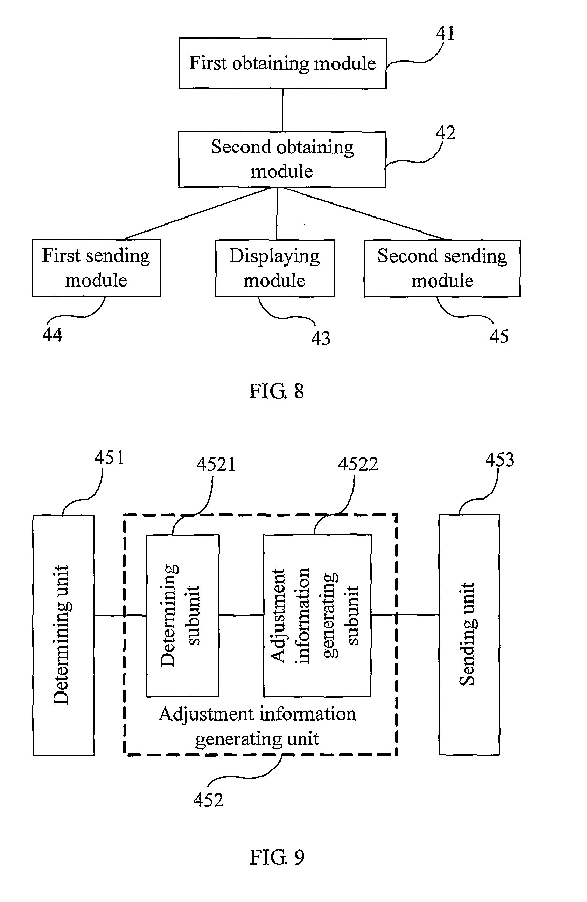

The network QoS processing apparatus provided in the foregoing apparatus embodiment may further include a displaying module. FIG. 8 is a schematic structural diagram of a network QoS processing apparatus according to a fourth embodiment of the present invention. As shown in FIG. 8, the network QoS processing apparatus includes a first obtaining module 41, a second obtaining module 42, and a displaying module 43. The first obtaining module 41 is configured to obtain actual usage information of network quality parameters, where the network quality parameters include transmission bandwidth, and network delay and/or network packet loss ratio. The second obtaining module 42 is configured to obtain descriptive information of network QoS according to the actual usage information of the network quality parameters. The displaying module 43 is configured to display the descriptive information of the network QoS according to a preset display policy. The displaying module 43 may display the measured network quality data directly, or multiply the measured network quality data by 100 for displaying, or display the data in graphs. For details, see the method embodiment above.

The apparatus may further include a first sending module 44. The first sending module 44 is configured to generate and send information according to the descriptive information of the network QoS, where the information is used for notifying the sender to adjust the coding algorithm to adapt to different levels of network QoS. Specifically, when the Q value is great, namely, when the network QoS is good, the first sending module 44 uses an audio coding algorithm such as AAC-LD, which provides good voice quality but requires a high QoS level of the network; when the Q value is small, the first sending module 44 uses a G.711 algorithm that requires a moderate QoS level of the network.

The network QoS processing apparatus may further include a second sending module 45, configured to generate and send information according to the descriptive information of the network QoS, where the information is used for notifying the sender to adjust the sending bandwidth. The second sending module may set the adjusted sending bandwidth to be in direct proportion to the descriptive information of the network QoS, for example, adjust the sending bandwidth to $K \times Q \times GB$, where K is a scale factor. Afterward, the second sending module sends a notification of the adjustment to the data sender so that the data sender adjusts the sending bandwidth to adapt to the network conditions according to the notification. After obtaining the descriptive information of the network QoS, the second sending module sends the descriptive information to the data sender so that the data sender calculates and adjusts the sending bandwidth. When adjusting the sending bandwidth, in order to prevent too frequent adjustment, conditions of adjustment may be set, and the transmission bandwidth is adjusted only if the conditions are fulfilled. One method is to set a threshold of change of the network QoS. FIG. 9 is a schematic structural diagram of a second sending module in an embodiment of the present invention. As shown in FIG. 9, the second sending module is divided into a determining unit 451, an adjustment information generating unit 452, and a sending unit 453. The determining unit 451 is configured to determine whether a change value of the network QoS exceeds a preset threshold according to the obtained descriptive information of the network QoS. The adjustment information generating unit 452 is configured to generate information when the change value exceeds the preset threshold, where the information is used for notifying the sender to adjust the sending bandwidth, and specifically, is used for notifying the sender to set the adjusted sending bandwidth to be in direct proportion to the descriptive information of the network QoS. The sending unit 453 is configured to send the information to the sender, where the information is used for notifying the sender to adjust the sending bandwidth. Further, a minimum adjustment interval may be set. That is, the adjustment information generating unit 452 is divided into a determining subunit 4521 and an adjustment information generating subunit 4522. The determining subunit 4521 is configured to determine whether the waiting time exceeds the preset minimum adjustment interval. The adjustment information generating subunit 4522 is configured to generate the information which is used for notifying the sender to adjust the sending bandwidth if the preset minimum adjustment interval is exceeded. The foregoing methods are capable of notifying the data sender to adjust the transmission bandwidth and prevent too frequent adjustment.

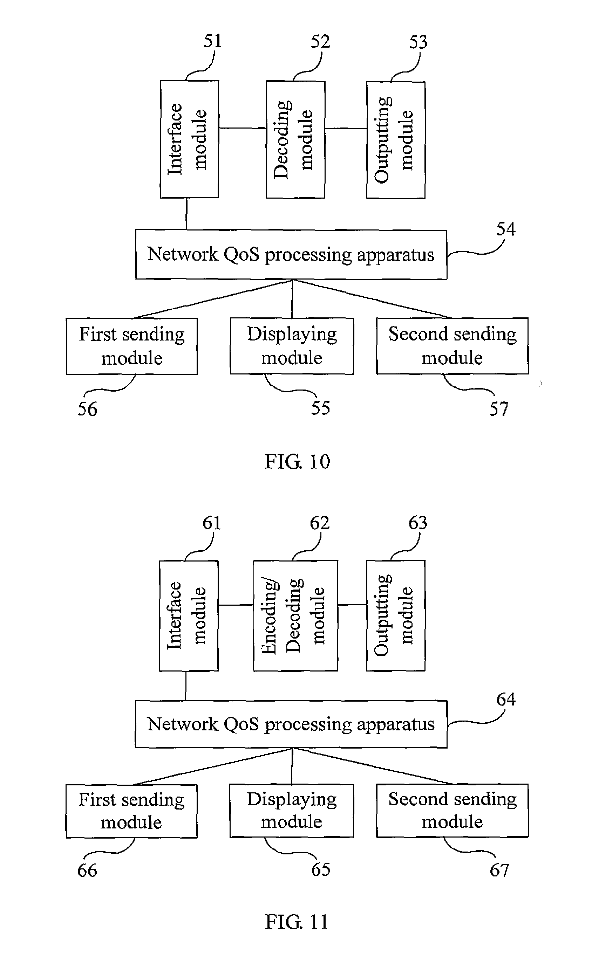

An STB is provided in an embodiment of the present invention. FIG. 10 is a schematic structural diagram of an STB according to an embodiment of the present invention. As shown in FIG. 10, the STB includes an interface module 51, a decoding module 52, and an outputting module 53, and may further include a network QoS processing apparatus 54 mentioned in the foregoing embodiment. The network QoS processing apparatus 54 is connected to the interface module 51, and can measure the descriptive information of the network QoS quantitatively and accurately, and can set the displaying module 55 to display the descriptive information. The STB may further include a first sending module 56 and/or a second sending module 57. The first sending module 56 is configured to generate and send information according to the descriptive information of the network QoS, where the information is used for notifying the data sender to adjust the coding algorithm. The second sending module 57 is configured to generate and send information according to the descriptive information of the network QoS, where the information is used for notifying the data sender to adjust the sending bandwidth. The displaying module, the first sending module, and the second sending module may be set on a net conference terminal separately, or set in a network QoS processing apparatus. A network QoS processing apparatus is installed on the STB provided in this embodiment. The apparatus can obtain quantitative descriptive information of the network QoS, and submit the information to the user. Meanwhile, the apparatus can generate information according to the descriptive information, where the information is used for notifying the sender to adjust the sending bandwidth or coding algorithm so as to improve the network QoS.

A net conference terminal is provided in an embodiment of the present invention. FIG. 11 is a schematic structural diagram of a net conference terminal according to an embodiment of the present invention. As shown in FIG. 11, the net conference terminal includes a conventional interface module 61, an encoding/decoding module 62, and an outputting module 63, and may further include a network QoS processing apparatus 64 mentioned in the foregoing embodiment. The network QoS processing apparatus 64 is connected to the interface module 61, and can measure the descriptive information of the network QoS quantitatively and accurately, and can set the displaying module 65 to display the descriptive information. The STB may further include a first sending module 66 and/or a second sending module 67. The first sending module 66 is configured to generate and send information according to the descriptive information of the network QoS, where the information is used for notifying the data sender to adjust the coding algorithm. The second sending module 67 is configured to generate and send information according to the descriptive information of the network QoS, where the information is used for notifying the data sender to adjust the sending bandwidth. The displaying module, the first sending module, and the second sending module may be set on a net conference terminal separately, or set in a network QoS processing apparatus. A network QoS processing apparatus is installed on the net conference terminal provided in this embodiment. The apparatus can obtain quantitative descriptive information of the network QoS, and submit the information to the user. Meanwhile, the apparatus can generate information according to the descriptive information, where the information is used for notifying the sender to adjust the sending bandwidth or coding algorithm so as to improve the network QoS.

A network QoS processing system is provided in an embodiment of the present invention. The system includes a communication network and a network QoS processing apparatus located in the communication network. Specifically, the network QoS processing apparatus is configured to: obtain actual usage information of network quality parameters of the communication network, where the network quality parameters include transmission bandwidth, and network delay and/or network packet loss ratio; and obtain descriptive information of network QoS of the communication network according to the actual usage information of the network quality parameters.

The network QoS processing apparatus in the foregoing embodiment includes a first obtaining module and a second obtaining module. The first obtaining module is configured to obtain actual usage information of network quality parameters, where the network quality parameters include transmission bandwidth, and network delay and/or network packet loss ratio; and the second obtaining module is configured to obtain descriptive information of network QoS according to the actual usage information of the network quality parameters. The network QoS processing apparatus may further include a displaying module, configured to display the descriptive information of the network QoS according to a preset display policy.

On the basis of the foregoing embodiment, the network QoS processing system may further include a first sending module, configured to generate and send information according to the descriptive information of the network QoS, where the information is used for notifying the sender to adjust the coding algorithm. The network QoS processing system may further include a second sending module, configured to generate and send information according to the descriptive information of the network QoS, where the information is used for notifying the sender to adjust the sending bandwidth.

The network QoS processing system in this embodiment takes the transmission bandwidth into consideration while measuring the network QoS quantitatively. Therefore, the measurement result is more accurate and objective. The network QoS processing apparatus is configured to instruct the data sender to adjust the sending bandwidth to adapt to the actual network conditions according to the obtained descriptive information of the network QoS.

In the foregoing embodiment, the transmission bandwidth, network delay and network packet loss ratio are considered in the process of obtaining the descriptive information of the network QoS, and the packet size may be considered additionally. If the packet size is considered, the network QoS processing apparatus is further configured to obtain actual usage information of network quality parameters of the communication network, where the network quality parameters include transmission bandwidth, network delay, network packet loss ratio, and packet size; and obtain the descriptive information of the network QoS of the communication network according to the actual usage information. Specifically, a function relationship may be set up between the network QoS and the network quality parameter through a Gilbert model, and the obtained actual values of the network quality parameters are substituted into the function relationship to work out the descriptive information of the network QoS. In this embodiment, the packet size is considered along with the factors such as transmission bandwidth in the process of obtaining the descriptive information of the network QoS. Therefore, the selected parameters are more comprehensive, and the obtained descriptive information is more accurate and objective.

In the foregoing embodiment, the communication network may be an IP network which transmits IPTV services. In this case, the network QoS processing apparatus is set on the IP STB, and the IP STB receives the IPTV service while processing the QoS, for example, displaying the descriptive information of the QoS. Further, bidirectional video communication may be performed. In this case, the network QoS processing apparatus is set on the video communication device (such as a videophone or a videoconference terminal). The video communication device is configured to perform the bidirectional video communication service while processing QoS, for example, displaying the descriptive information of the QoS and adjusting the sending bandwidth according to the QoS information. The network QoS processing apparatus in this embodiment may be applied to various media services based on a packet network.

Through the STB, the net conference terminal, the method, apparatus and system for processing network QoS, multiple network quality parameters such as transmission bandwidth are considered in the process of measuring the network QoS, and a function relationship is set up between the network QoS and the network quality parameters through a weight model and a Gilbert model respectively; the obtained values of the network quality parameters (such as network packet loss ratio, network delay, transmission bandwidth, and packet size) are substituted into the function relationship to calculate the network QoS quantitatively and obtain the descriptive information of the network QoS. Because the transmission bandwidth is considered, the measurement result is more accurate and reflects the network QoS more accurately and objectively. Moreover, the descriptive information of the network QoS is displayed to the user in real time so that the user can judge whether the deterioration of the service quality is caused by the network or the terminal. The sending bandwidth of the data sender is adjusted according to the descriptive information of the measured network QoS so that the transmission bandwidth is adaptable to the network conditions.

Finally, it should be noted that the above embodiments are merely provided for describing the technical solution of the present invention, but not intended to limit the present invention. It is apparent that persons skilled in the art can make various modifications, variations, and replacements to the invention without departing from the scope of the invention. The present invention is intended to cover the modifications, variations, and replacements provided that they fall within the scope of protection defined by the following claims or their equivalents.

**Claims**

1.  A method for processing network Quality of Service (QoS), comprising:

    obtaining actual usage information of network quality parameters, wherein the network quality parameters comprise transmission bandwidth, and network delay and/or network packet loss ratio, ; and
    obtaining descriptive information of network QoS according to the actual usage information of the network quality parameters.

2.  The method for processing network QoS according to claim 1, wherein: the step of obtaining the descriptive information of network QoS according to the actual usage information of the network quality parameters comprises:

    obtaining weight values of the transmission bandwidth, and network delay and/or network packet loss ratio respectively; and
    obtaining the descriptive information of the network QoS according to the weight values, transmission bandwidth, and network delay and/or network packet loss ratio.

3.  The method for processing network QoS according to claim 2, wherein: the step of obtaining the weight values of the transmission bandwidth, and network delay and/or network packet loss ratio comprises:

    obtaining initial QoS data of the network quality parameters;
    normalizing the transmission bandwidth, and network delay and/or network packet loss ratio according to the initial QoS data; and
    obtaining weight values of the normalized transmission bandwidth, normalized network delay and/or normalized network packet loss ratio respectively;
    the step of obtaining the descriptive information of the network QoS according to the weight values, transmission bandwidth, network delay, and/or network packet loss ratio comprises:

    obtaining the descriptive information of the network QoS according to the weight values, normalized transmission bandwidth, normalized network delay and/or normalized network packet loss ratio.

4.  The method for processing network QoS according to claim 3, wherein:

    the transmission bandwidth, and network delay and/or network packet loss ratio are normalized according to the initial QoS data through:

$$b' = \frac{BB - b}{BB - GB}, \quad d' = \frac{BD - d}{BD - GD}, \text{ and } \quad p' = \frac{BP - p}{BP - GP},$$

    wherein
    $b$, $d$, and $p$ are transmission bandwidth, network delay and network packet loss ratio respectively; $BB$, $BD$, and $BP$ are worst transmission bandwidth, worst network delay and worst network packet loss ratio in the initial QoS data respectively; *GB*, *GD*, and *GP* are best transmission bandwidth, best network delay and best network packet loss ratio in the initial QoS data respectively; and *b'*, *d'*, and *p'* are the normalized transmission bandwidth, normalized network delay, and normalized network packet loss ratio respectively.

**5.** The method for processing network QoS according to claim 4, wherein:

the step of obtaining the descriptive information of the network QoS according to the weight values, normalized transmission bandwidth, normalized network delay and/or normalized network packet loss ratio comprises:

obtaining the descriptive information of the network QoS if the network quality parameters comprise transmission bandwidth, network delay and network packet loss ratio, wherein the descriptive information is:

$$Q = f(b, d, p) = W_b b' + W_d d' + W_p p',$$

wherein
Q is the descriptive information of the network QoS, $W_b$ is the weight value of the transmission bandwidth, $W_d$ is the weight value of the network delay, $W_p$ is the weight value of the network packet loss ratio, and $W_b + W_d + W_p = 1$.

**6.** The method for processing network QoS according to claim 4, wherein:

the step of obtaining the descriptive information of the network QoS according to the weight values, normalized transmission bandwidth, normalized network delay and/or normalized network packet loss ratio comprises:

obtaining the descriptive information of the network QoS if the network quality parameters are transmission bandwidth and network delay, wherein the descriptive information is:

$$Q = f(b, d) = W_b b' + W_d d',$$

wherein
Q is the descriptive information of the network QoS, $W_b$ is the weight value of the transmission bandwidth, $W_d$ is the weight value of the network delay, and $W_b + W_d = 1$.

**7.** The method for processing network QoS according to claim 4, wherein:

the step of obtaining the descriptive information of the network QoS according to the weight values, normalized transmission bandwidth, normalized network delay and/or normalized network packet loss ratio comprises:

if the network quality parameters are transmission bandwidth and network packet loss ratio, the descriptive information of the network QoS is:

$$Q = f(b, p) = W_b b' + W_p p',$$

wherein
Q is the descriptive information of the network QoS, $W_b$ is the weight value of the transmission bandwidth, $W_p$ is the weight value of the network packet loss ratio, and $W_b + W_p = 1$.

**8.** The method for processing network QoS according to claim 1, wherein:

the network quality parameters comprise transmission bandwidth, network delay and network packet loss ratio, and further comprise packet size, and the step of obtaining the descriptive information of the network QoS according to the actual usage information of the network quality parameters comprises:

obtaining the descriptive information of the network QoS according to packet size, network delay and network packet loss ratio if the network packet loss ratio is higher than a threshold of the network packet loss ratio, wherein the descriptive information is $Q = \dfrac{\eta \times s}{d \times \sqrt{p}}$ or $Q = Min\left(\dfrac{\eta \times s}{d \times GB \times \sqrt{p}}, 1\right)$,

wherein Q is the descriptive information of the network QoS, s is packet size, d is network delay, p is network packet loss ratio, GB is best transmission bandwidth in initial QoS data, $\eta$ is a set coefficient, and Min refers to taking the minimum value; and

obtaining the descriptive information of the network QoS according to the transmission bandwidth if the network packet loss ratio is lower than or equal to the threshold of the network packet loss ratio, wherein the descriptive information is $Q = \lambda \times b$ or $Q = Min\left(\dfrac{\lambda \times b}{GB}, 1\right)$, wherein Q is the descriptive information of the network QoS, b is the transmission bandwidth, GB is best transmission bandwidth in the initial QoS data, $\lambda$ is a set coefficient, and Min refers to taking the minimum value.

9. The method for processing network QoS according to any one of claims 1-8, wherein the obtaining of the network delay comprises:

calculating the network delay according to difference between unidirectional delays.

10. The method for processing network QoS according to claim 9, wherein the network delay is calculated according to the difference between the unidirectional delays through:

$d = d_0 + [(T_r\text{-}T_s)\text{-}(T_{r0}\text{-}T_{s0})]$, wherein $d_0$ is an initial delay value at time $t_0$, $(T_r\text{-}T_s)$ is a unidirectional delay at current time and is obtained according to sending time $T_s$ and receiving time $T_r$, $(T_{r0}\text{-}T_{s0})$ is a unidirectional delay at time $t_0$ and is obtained according to the sending time $T_{r0}$, and the receiving time $T_{s0}$.

11. The method for processing network QoS according to any one of claims 1-8, wherein the step of obtaining the actual usage information of the transmission bandwidth comprises:

using a current receiving rate of a network interface on a receiver as the transmission bandwidth, or using a previously measured receiving rate of the network interface on the receiver as the transmission bandwidth, depending on network conditions.

12. The method for processing network QoS according to claim 11, wherein:

the step of using the current receiving rate or the previously measured receiving rate of the network interface on the receiver according to the network conditions comprises:

obtaining the transmission bandwidth if the network packet loss ratio is lower than or equal to the threshold of the network packet loss ratio, wherein the transmission bandwidth is a previously measured transmission bandwidth or the current receiving rate of the network interface on the receiver, whichever is higher.

13. The method for processing network QoS according to claim 1, wherein:

after obtaining the descriptive information of the network QoS according to the actual usage information of the network quality parameters, the method further comprises:

displaying the descriptive information of the network QoS according to a preset display policy.

14. The method for processing network QoS according to claim 1, wherein:

after obtaining the descriptive information of the network QoS according to the actual usage information of the network quality parameters, the method further comprises:

adjusting a coding algorithm according to the descriptive information of the network QoS.

15. The method for processing network QoS according to claim 1, wherein:

after obtaining the descriptive information of the network QoS according to the actual usage information of the network quality parameters, the method further comprises:

adjusting sending bandwidth according to the descriptive information of the network QoS.

16. The method for processing network QoS according to claim 15, wherein the step of adjusting the sending bandwidth according to the descriptive information of the network QoS comprises:

adjusting the sending bandwidth when determining that a change value of the network QoS exceeds a preset threshold according to the descriptive information of the network QoS.

17. The method for processing network QoS according to claim 16, wherein the step of adjusting the sending bandwidth when determining that the change value exceeds the preset threshold comprises:

adjusting the sending bandwidth when determining that a preset minimum adjustment interval is exceeded.

18. The method for processing network QoS according to claim 17, wherein the step of adjusting the sending bandwidth comprises:

setting the adjusted sending bandwidth to be in direct proportion to the descriptive information of the network QoS.

19. A network Quality of Service (QoS) processing apparatus, comprising:

a first obtaining module, configured to obtain actual usage information of network quality parameters, wherein the network quality parameters comprise transmission bandwidth, and network delay and/or network packet loss ratio; and
a second obtaining module, configured to obtain descriptive information of network QoS according to the actual usage information of the network quality parameters.

20. The network QoS processing apparatus according to claim 19, wherein the second obtaining module comprises:

a first weight value obtaining unit, configured to obtain weight values of the transmission bandwidth, and network delay and/or network packet loss ratio respectively; and
a first descriptive information obtaining unit, configured to obtain the descriptive information of the network QoS according to the weight values, transmission bandwidth, and network delay and/or network packet loss ratio.

21. The network QoS processing apparatus according to claim 20, wherein:

the first weight value obtaining unit comprises:

a QoS data obtaining unit, configured to obtain initial QoS data of the network quality parameters;
a data processing unit, configured to normalize the transmission bandwidth, network delay and/or network packet loss ratio according to the initial QoS data; and
a second weight value obtaining unit, configured to obtain weight values of the normalized transmission bandwidth, normalized network delay and/or normalized network packet loss ratio respectively;
the first descriptive information obtaining unit comprises a second descriptive information obtaining unit, configured to obtain the descriptive information of the network QoS according to the weight values, normalized transmission bandwidth, normalized network delay and/or normalized network packet loss ratio.

22. The network QoS processing apparatus according to claim 19, further comprising:

a displaying module, configured to display the descriptive information of the network QoS according to a preset display policy.

23. The network QoS processing apparatus according to claim 19, further comprising:

a first sending module, configured to generate and send information according to the descriptive information of the network QoS, wherein the information is used for notifying a sender to adjust a coding algorithm.

24. The network QoS processing apparatus according to any one of claims 19-23, further comprising:

a second sending module, configured to generate and send information according to the descriptive information of the network QoS, wherein the information is used for notifying the sender to adjust sending bandwidth.

25. The network QoS processing apparatus according to claim 24, wherein the second sending module comprises:

a determining unit, configured to determine whether a change value of the network QoS exceeds a preset threshold according to the descriptive information of the network QoS;
an adjustment information generating unit, configured to generate information which is used for notifying the sender to adjust the sending bandwidth if the change value exceeds the preset threshold; and
a sending unit, configured to send the information to the sender, wherein the information is used for notifying the sender to adjust the sending bandwidth.

26. The network QoS processing apparatus according to claim 25, wherein the adjustment information generating unit comprises:

a determining subunit, configured to determine whether the waiting time exceeds the preset minimum adjustment interval;
an adjustment information generating subunit, configured to generate information which is used for notifying the sender to adjust the sending bandwidth if the preset minimum adjustment interval is exceeded.

27. A Set Top Box (STB), comprising an interface module, a decoding module, and an outputting module, and further comprising the network QoS processing apparatus specified in any one of claims 19-26, wherein the network QoS processing apparatus is connected to the interface module.

28. A net conference terminal, comprising an interface module, an encoding/decoding module, and an outputting module, and further comprising the network Quality of Service (QoS) processing apparatus specified in any one of claims 19-26, wherein the network QoS processing apparatus is connected to the interface module.

29. A network Quality of Service (QoS) processing system, comprising:

a communication network and a network QoS processing apparatus located in the communication network; wherein
the network QoS processing apparatus is configured to: obtain actual usage information of network quality parameters of the communication network, wherein the network quality parameters comprise transmission bandwidth, and network delay and/or network packet loss ratio; and obtain descriptive information of network QoS of the communication network according to the actual usage information of the network quality parameters.

30. The network QoS processing system according to claim 29, wherein the network QoS processing apparatus comprises:

a first obtaining module, configured to obtain the actual usage information of the network quality parameters, wherein the network quality parameters comprise transmission bandwidth, and network delay and/or network packet loss ratio;
a second obtaining module, configured to obtain descriptive information of network QoS according to the actual usage information of the network quality parameters; and
a displaying module, configured to display the descriptive information of the network QoS according to a preset display policy.

31. The network QoS processing system according to claim 30, wherein the network QoS processing apparatus further comprises:

a first sending module, configured to generate and send information according to the descriptive information of the network QoS, wherein the information is used for notifying a sender to adjust a coding algorithm; and/or a second sending module, configured to generate and send information according to the descriptive information of the network QoS, wherein the information is used for notifying the sender to adjust sending bandwidth.

Obtain actual usage information of network
quality parameters

101

Obtain descriptive information of network QoS
according to the actual usage information of the
network quality parameters

102

## FIG. 1

Obtain actual usage information of network
quality parameters, where the network quality
parameters include transmission bandwidth,
and network delay and/or network packet loss
ratio

201

Obtain weight values of the transmission
bandwidth, and network delay and/or network
packet loss ratio respectively

202

Obtain descriptive information of the network
QoS according to the weight values,
transmission bandwidth and network delay and/
or network packet loss ratio

203

## FIG. 2

```
┌─────────────────────────────────────┐
│ Obtain actual usage information of   │   301
│ network quality parameters, where    │
│ the network quality parameters       │
│ include transmission bandwidth, and  │
│ network delay and/or network packet  │
│ loss ratio                           │
└─────────────────────────────────────┘
                  │
                  ▼
┌─────────────────────────────────────┐
│ Obtain initial QoS data of the       │   302
│ network quality parameters           │
└─────────────────────────────────────┘
                  │
                  ▼
┌─────────────────────────────────────┐
│ Normalize the transmission           │   303
│ bandwidth, and network delay and/or  │
│ network packet loss ratio according  │
│ to the initial QoS data              │
└─────────────────────────────────────┘
                  │
                  ▼
┌─────────────────────────────────────┐
│ Obtain weight values of the          │   304
│ normalized transmission bandwidth,   │
│ and network delay and/or network     │
│ packet loss ratio respectively       │
└─────────────────────────────────────┘
                  │
                  ▼
┌─────────────────────────────────────┐
│ Obtain descriptive information of    │   305
│ the network QoS according to the     │
│ weight values, normalized            │
│ transmission bandwidth and           │
│ normalized network delay and/or      │
│ network packet loss ratio            │
└─────────────────────────────────────┘
```

FIG. 3

Q=0.6

FIG. 4A

Q=1.0

FIG. 4B

First obtaining module  — 11

Second obtaining module  — 12

FIG. 5

First obtaining
module                    _21_

Second obtaining
module                         _22_

First weight value
obtaining unit                _221_

First descriptive
information obtaining
unit                          _222_

FIG. 6

First obtaining module        _31_

Second obtaining module       _32_

QoS data obtaining unit       _321_

Data processing unit          _322_

Second weight value
obtaining unit                _323_

Second descriptive
information obtaining
unit                          _324_

FIG. 7

First obtaining module — 41

Second obtaining module — 42

First sending module — 44

Displaying module — 43

Second sending module — 45

FIG. 8

451 — Determining unit

4521 — Determining subunit

4522 — Adjustment information generating subunit

453 — Sending unit

Adjustment information generating unit

452

FIG. 9

51       52       53

| Interface module | Decoding module | Outputting module |

Network QoS processing apparatus   54

| First sending module | Displaying module | Second sending module |

56            55           57

FIG. 10

61       62       63

| Interface module | Encoding/ Decoding module | Outputting module |

Network QoS processing apparatus   64

| First sending module | Displaying module | Second sending module |

66            65           67

FIG. 11

# INTERNATIONAL SEARCH REPORT

| International application No. |
|---|
| PCT/CN2009/073616 |

## A. CLASSIFICATION OF SUBJECT MATTER

See the extra sheet

According to International Patent Classification (IPC) or to both national classification and IPC

## B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

WPI,EPODOC: network,web,QoS,quality of service,measur+,detect+,control+,parameter?,band,loss,delay,set top box, STB

CNPAT,CNKI:

## C. DOCUMENTS CONSIDERED TO BE RELEVANT

| Category* | Citation of document, with indication, where appropriate, of the relevant passages | Relevant to claim No. |
|---|---|---|
| P,X | CN101447938A(SHENZHEN HUAWEI COMMUNICATION TECHNOLOGY CO LTD) 03 June 2009（03.06.2009） the description page 2 line 3 – page 19 line 2, figures 1-11 | 1-31 |
| X | CN1933431A(HUAWEI TECH CO LTD)21 Mar. 2007（21.03.2007） the description page 1 line 18 – page 6 line 1, figures 1-3 | 1,2,9,11,14,15,19,20,23,24,29 |
| A | CN1541001A(ZHONGXING COMM CO LTD)27 Oct. 2004（27.10.2004）the whole document | 1-31 |
| A | CN1694492A(BEIJING YINGLICHI TECHNOLOGY CO LTD)09 Nov. 2005（09.11.2005）the whole document | 1-31 |
| A | CN1988468A(HUAWEI TECH CO LTD)27 June 2007（27.06.2007）the whole document | 1-31 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 Nov. 2009（18.11.2009） | **10 Dec. 2009 (10.12.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **GUO Xiaoyu** Telephone No. (86-10)62411453 |
|---|---|

Form PCT/ISA /210 (second sheet) (July 2009)

## INTERNATIONAL SEARCH REPORT
### Information on patent family members

| | | International application No. |
|---|---|---|
| | | PCT/CN2009/073616 |

| Patent Documents referred in the Report | Publication Date | Patent Family | Publication Date |
|---|---|---|---|
| CN101447938A | 03.06.2009 | None | |
| CN1933431A | 21.03.2007 | WO2008043304A1 | 17.04.2008 |
| | | EP1983688A1 | 22.10.2008 |
| | | US2009016233A1 | 15.01.2009 |
| CN1541001A | 27.10.2004 | CN1287612C | 29.11.2006 |
| CN1694492A | 09.11.2005 | None | |
| CN1988468A | 27.06.2007 | EP1802035A1 | 27.06.2007 |
| | | US2007165535A1 | 19.07.2007 |
| | | WO2007071137A1 | 28.06.2007 |
| | | EP1802035B1 | 25.06.2008 |
| | | CN101160823A | 09.04.2008 |
| | | DE602006001568E | 07.08.2008 |

Form PCT/ISA /210 (patent family annex) (July 2009)

## INTERNATIONAL SEARCH REPORT

| International application No. |
| --- |
| PCT/CN2009/073616 |

A.  CLASSIFICATION OF SUBJECT MATTER

According to International Patent Classification (IPC) or to both national classification and IPC

H04L12/56（2006.01）i
H04L1/00（2006.01）i
H04L12/18（2006.01）i
H04L29/08（2006.01）i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810239101